# EUROPÄISCHE PATENTSCHRIFT

(11) **EP 0 863 338 B1**
(45) Veröffentlichungstag und Bekanntmachung des Hinweises auf die Patenterteilung: **02.07.2003**
(21) Anmeldenummer: 98103689.0
(22) Anmeldetag: 03.03.1998
(51) Int. Cl.: F16K 1/34, F16K 1/46, F16K 1/42

(54) **Ventil**
Valve
Soupape

(30) Priorität: 05.03.1997 DE 29704033 U
(43) Veröffentlichungstag der Anmeldung: 09.09.1998
(73) Patentinhaber: Xomox International GmbH & Co., 88131 Lindau (DE)
(72) Erfinder: Gonsior, Wolfgang, D-88131 Bodolz (DE)
(74) Vertreter: Schmitt, Meinrad, Dipl.-Ing.

(56) Entgegenhaltungen:
- EP-A- 0 022 672
- AU-B- 433 228
- DE-B- 1 248 490
- DE-C- 809 506
- GB-A- 1 223 122
- US-A- 5 033 495

## Beschreibung

Die Erfindung bezieht sich auf ein Ventil, insbesondere für Behälter, gemäß der im Oberbegriff des Patentanspruchs 1 angegebenen Merkmale.

Aus der US-A-5 033 495 ist ein derartiges Ventil bekannt, welches als Bodenventil eines Behälters ausgebildet ist. Der Behälter ist innen mit Email ausgekleidet und enthält am Boden einen Stutzen, welcher als zylindrischer Gehäuseteil des Ventils genutzt wird. Das Ventilgehäuse enthält ferner einen metallischer Sitzring oder Ventilsitz, welcher in den zylindrischen Gehäuseteil bzw. den Stutzen des Bodenventils hineinragt. Zwischen dem Sitzring und dem zylindrischen Gehäuseteil ist eine elastische Dichtring angeordnet, welche mit einer radial nach innen gerichteten Dichtlippe auf dem freien Ende des Sitzringes aufliegt. Zum Verschließen des Ventils wird dessen sphärischer Ventilkörper an die radial nach innen gerichtete Dichtlippe gepreßt, welche auf das freie Ende des Gehäuse-Sitzringes gepreßt wird. Infolge der Auskleidung, insbesondere Emailierung der Innenfläche des Behälters, der beispielsweise als Reaktionsgefäß oder Tank ausgebildet ist, können infolge von Form- und / oder Maßtoleranzen nicht unerhebliche Probleme bei der Abdichtung auftreten. Zwischen dem Ventilsitz und dem Inneren des Ventilgehäuses oder des Stutzens können Toträume auftreten, in welchen sich Bestandteile des mittels des Ventils abzusperrenden Mediums festsetzen können, welche bei Befüllung des Behälters oder allgemein beim Durchströmen des Ventils mit einem anderen Medium dieses in nachteiliger Weise verunreinigen können. Da die Behälter, Reaktoren oder dergleichen oftmals mit unterschiedlichen Medien beschickt werden, erfordern Reinigungsmaßnahmen des Ventils, des zylindrischen Gehäuseteils oder des Stutzens einen erheblichen Aufwand, wobei in der Praxis dennoch Restmengen in Toträumen sehr nachteilig in Erscheinung treten.

Ferner ist aus der AU 433 228 B ein Ventil in einem Sitzring bekannt, welcher in einer Öffnung eines plattenförmigen Elements angeordnet ist. Der Sitzring enthält an seiner Außenfläche eine umlaufende Ringnut mit nach außen gerichteten Schenkeln, welche die Ränder der genannten Bohrung des plattenförmigen Elements umgreifen. In der Bodenfläche der Ringnut ist ein radial vorstehendes elastisches Dichtelement vorgesehen. Der Ventilkörper gelangt beim Schließen des Ventils an einen Bereich des Sitzringes zur Anlage, welcher Bereich beabstandet von der genannten Ringnut mit dem Dichtelement liegt.

Des weiteren ist aus der EP-A-0 022 672 ein Ventil mit einem Sitzring bekannt, dessen Anlagebereich für einen Ventilkörper einen radial außenliegenden flanschartigen Ringteil aufweist. Dieser Ringteil kann beim Schließen des Ventils bzw. bei Anlage des Ventilkörpers frei radial zur Seite ausweichen, ohne daß in einem Totraum sich das Strömungsmedium festsetzen könnte. Der Sitzring weist an dem von der Sitzfläche bzw. der Anlagefläche für den Ventilkörper abgewandten Ende ein Dichtelement auf, welches in Wechselbeanspruchungen beim Öffnen und Schließen des Ventils infolge des anliegenden Ventilkörpers nicht ausgesetzt ist.

Der Erfindung liegt die Aufgabe zugrunde, das Ventil der genannten Art mit geringem Aufwand dahingehend weiterzubilden, daß bei großen Toleranzen eine funktionssichere Abdichtung gewährleistet ist. Der Fertigungs- und Montageaufwand soll gering gehalten werden und aufwendige Bearbeitungsmaßnahmen sollen entfallen. Ferner soll das Festsetzen von Teilen des Mediums im Bereich des Ventils vermieden werden.

Die Lösung dieser Aufgabe erfolgt gemäß den im Anspruch 1 angegebenen Merkmalen.

Das erfindungsgemäße Ventil zeichnet sich durch eine funktionsgerechte Konstruktion aus und das Dichtelement zwischen dem Ventilsitz und dem Inneren des Gehäuseteils oder des Stutzens gewährleistet die Überbrückung auch von hohen Form- und Maßtoleranzen des rohrförmigen Gehäuseteils, welcher insbesondere integraler Bestandteil eines Behälters ist. Das Ventil kann als Ablaufventil ebenso wie als Zuführventil ausgebildet und mit dem Boden oder mit der Decke des Behälters verbunden sein. Die Innenfläche des rohrförmigen Gehäuseteils oder Stutzens und zweckmäßig die Innenfläche des Behälters und / oder des Ventils sind mit einer Auskleidung versehen, wobei an dieser Stelle vor allem auf eine Kunststoffauskleidung, Gummierung oder eine Emaillierung ausdrücklich verwiesen sei. Eine derartige Auskleidung und / oder Beschichtung kann ferner metallisch sein, wobei insbesondere auf Edelstahl, Speziallegierungen oder Titan hingewiesen sei. Derartige Auskleidungen dienen vor allem in der chemischen, bio-chemischen, pharmazeutischen oder NahrungsmittelIndustrie zur Aufnahme der unterschiedlichsten Flüssigkeiten, Feststoffe oder gasförmigen Komponenten, wobei nachteilige Reaktionen oder Korrosionen mittels der Auskleidung vermieden werden. Die vor allem beim Auskleiden des genannten Gehäuseteils, bevorzugt durch Emaillieren, sich ergebenden Form- und Maßabweichungen bzw. Toleranzen werden durch das erfindungsgemäß zwischen dem Ventilsitz und der Innenfläche des Gehäuseteils angeordneten Dichtungselement überbrückt und / oder ausgeglichen. Das Dichtungselement ist zwischen dem zumindest teilweise zylindrisch oder als Buchse ausgebildeten Ventilsitz und der Innenfläche des Gehäuseteils angeordneten Dichtungselement überbrückt und / oder ausgeglichen. Das Dichtungselement ist zwischen dem zumindest teilweise zylindrisch oder als Buchse ausgebildeten Ventilsitz und der Innenfläche des Gehäuseteils angeordnet. Mittels der radial über die zumindest teilweise zylindrische Außenfläche des Ventilsitzes radial vorstehenden Dichtung werden die an dem Behälterstutzen auftretenden Abweichungen ausgeglichen.

Bevorzugt besteht der Ventilsitz zumindest teilweise aus Kunststoff oder ist mit Kunststoff umhüllt, wobei vorzugsweise PFA, PTFE oder andere fluorierte Kunststoffe zum Einsatz gelangen. Das an der Außenseite des Ventilsitzes angeordnete Dichtelement besteht hingegen aus Elastomer oder einem elastischen Werkstoff und ist in zweckmäßiger Weise fest mit dem Sitzring oder Ventilsitz verbunden. Auch die integrale Ausbildung von Ventilsitz und Dichtelement wird von der Erfindung erfaßt, wobei als Werkstoff ein derart elastischer Kunststoff vorgesehen ist, daß einerseits für den Ventilsitz die erforderliche Festigkeit erreicht wird und andererseits, insbesondere in Kombination mit der Formgebung, die Überbrückungs- und Ausgleichsfunktion des Dichtelements gewährleistet ist. Durch die Ausbildung des Dichtelements als Lippendichtung wird in besonders zweckmäßiger Weise die erforderliche Elastizität und Anpaßbarkeit erreicht, wobei andererseits das Material des Ventilsitzes mit der erforderlichen Steifigkeit, Abriebsfestigkeit, Härte ausgebildet ist. Das Dichtelement ist insbesondere am freien Ende und/oder unmittelbar und/oder kontinuierlich anschließend an die freie Stirnfläche oder Endfläche des Ventilsitzes angeordnet. Das Festsetzen von Medium wird vermieden, zumal beim Reinigen eines Behälters, des Ventils oder dergleichen Restmengen des Mediums problemlos entfernbar sind. Das Ventilgehäuse mit dem bewegbaren und mit dem Ventilsitz korrespondierenden Ventilkörper ist mit dem Gehäuseteil verbunden, welcher im Inneren, zumindest im Bereich des Ventilsitzes, zylindrisch ausgebildet ist, wobei die genannte Verbindung in vorteilhafter Weise auch den Ventilsitz umfaßt. Der Ventilsitz enthält einen Flansch, welcher zwischen dem Ende des Gehäuseteils und dem übrigen Ventilgehäuse, vorzugsweise zwischen zwei Flanschen, angeordnet ist. Auch bei einer Reduzierung der Flanschpressung wird mittels des zwischen der Innenfläche des bevorzugt mit einer Auskleidung versehenen Gehäuseteils und dem zumindest teilweise elastischen Ventilsitz erfindungsgemäß angeordneten Dichtrings eine funktionsgerechte Dichtigkeit nach außen und/oder zur Atmosphäre sichergestellt.

Weiterbildungen und besondere Ausgestaltungen der Erfindung sind in den Unteransprüchen sowie der weiteren Beschreibung angegeben.

Die Erfindung wird nachfolgend anhand der in der Zeichnung dargestellten Ausführungsformen näher erläutert. Es zeigen:
- Fig. 1: schematisch einen axialen Schnitt durch das Ventil,
- Fig. 2: einen Schnitt durch eine weitere Ausführungsform des Ventils,
- Fig. 3: eine detaillierte Darstellung des Ventilsitzes mit integriertem Dichtelement.

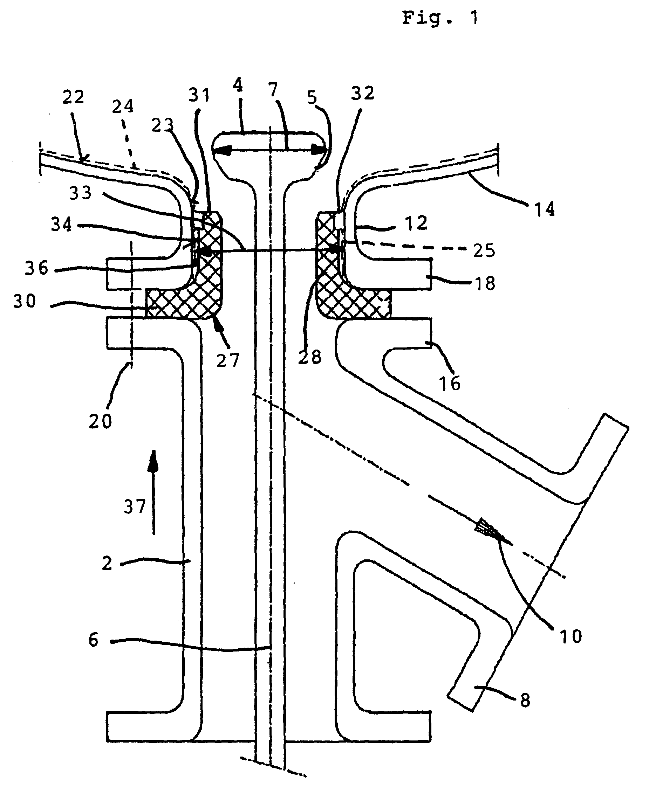

Fig. 1 zeigt das Ventil mit einem ersten Ventilgehäuseteil 2 und einem Ventilkörper 4, welcher in bekannter Weise im Gehäuse 2 längs einer Achse 6 bewegbar angeordnet ist. Der Ventilkörper 4 weist eine sphärische, bevorzugt konische oder kallottenförmige, Dichtfläche 5 auf. Der zumindest im Bereich der Dichtfläche 5 sphärisch ausgebildete Ventilkörper 4 weist einen maximalen Außendurchmesser 7 auf. Der Gehäuseteil 2 enthält einen Auslauf 8, aus welchem bei geöffnetem Ventil ein Medium in Richtung des Pfeiles 10 ausströmen kann. Der erste Ventilgehäuseteil 2 ist mit einem zweiten Ventilgehäuseteil 12 verbunden, welcher insbesondere als Stutzen ausgebildet und Bestandteil eines Behälters 14 ist. Der erste und der zweite Gehäuseteil 2 bzw. 12 enthalten Flansche 16, 18 zur gegenseitigen Verbindung, wobei in bekannter Weise, hier mit strichpunktierter Linie 20 angedeutet, über den Umfang verteilte Schrauben vorgesehen sind.

Der Behälter 14 und insbesondere der zweite Gehäuseteil oder Stutzen 12 sind an ihren Innenflächen 22, 23 mit einer mittels gestrichelten Linien angedeuteten Auskleidung 24, 25 versehen und / oder beschichtet. Vor allem bei emaillierten Behältern und Stutzen sind die Form- und Maßtoleranzen der vorzugsweise zylindrischen Innenfläche 23 des Stutzens 12 recht groß, wobei in der Praxis Maßabweichungen von 2 mm und größer nicht ungewöhnlich sind.

Das Ventil enthält ferner einen Sitzring oder Ventilsitz 27, welcher zumindest teilweise in dem Stutzen 12 angeordnet ist. Der Ventilsitz 27 besteht bevorzugt und zumindest teilweise aus Kunststoff. Wie aus der Zeichnung ersichtlich, weist der Sitzring bzw. Ventilsitz 27 innerhalb des Stutzens 12 einen zylindrischen oder buchsenförmigen Teil 28 auf und außerhalb einen radial gerichteten flanschförmigen Teil 30. Der flanschförmige Teil 30 ist zwischen den Endflächen einerseits des Stutzens 12 und andererseits dem ersten Gehäusesteil 2 angeordnet, und zwar insbesondere zwischen den beiden Flanschen 16, 18. Somit wird mit dem flanschförmigen Teil 30 eine funktionssischere Abdichtung zwicshen dem ersten Gehäuseteil 2 und dem zweiten Gehäuseteil bzw. Stutzen 12 sowie dem Behälter 14 gewährleistet.

Zwischen dem Sitzring 27 und der Innenfläche 23 des Stutzens 12 ist vorzugsweise im Bereich des vorderen freien Endes und/oder der Stirnfläche 31 des Sitzringes 27 ein ringförmiges Dichtelement 32 angeordnet. Insbesondere schließt das Dichtelement 32 unmittelbar und/oder ohne Absätze, Stufen oder dergleichen kontinuierlich an die Stirnfläche 31 an. Die Innenfläche 23, ggf. mit der dort vorgesehenen Auskleidung 25, weist regelmäßig einen Innendurchmesser auf, welcher um einen vorgegebenen Betrag größer ist als der Außendurchmesser der Außenfläche 34 des Teiles 28. Ein zwischen der zylindrischen Außenfläche 34 des Teiles 28 des Sitzringes 27 und der Innenfläche 23 des Stutzens 12 vorhandener Ringspalt oder Totraum 36 wird erfindungsgemäß mittels des ringförmigen Dichtelements 32 abgedichtet. Toleranzen der mit der Auskleidung 25 versehenen Innenfläche 23 des Stutzens 12 werden mittels des Dichtelements 32 ausgeglichen. Da das Dichtelement 32 direkt anschließend an die Stirnfläche 31 an der Außenseite des Sitzringes 27 angeordnet ist, wird auch in Richtung zum Innenraum des Behälters, gemäß Zeichnung oberhalb des ringförmigen Dichtelements 32 ein Festsetzen von Medium vermieden bzw. dessen Entfernen beim Ausspülen des Behälters problemlos ermöglicht. Es wird vermieden, daß Medium zwischen die Außenfläche 34 des Sitzringes 27 und die Stutzeninnenfläche 23 gelangt. Ferner wird in besonders zweckmäßiger Weise auch dann eine hinreichende Dichtigkeit zum Außenraum und / oder der Atmosphäre gewährleistet, wenn die Verbindungskräfte und/oder die Anpreßkräfte des flanschförmigen Teils 30 des Sitzringes 27 reduziert werden. Auch für eine lange Lebensdauer wird eine funktionssichere Abdichtung somit gewährleistet.

Bei dem erfindungsgemäßen Ventil ist der Außendurchmesser 7 des Ventilkörpers 4 kleiner als der Innendurchmesser 33 des zweiten Gehäuseteils, insbesondere des Stutzens 12. Zur Montage kann daher der erste Gehäuseteil 2 mit dem vormontierten Ventilkörper 6 und ggf. mit den gleichfalls vormontierten Betätigungselementen in den zweiten Gehäuseteil 12 in Richtung des Pfeiles 37 eingeschoben werden, wobei nachfolgend die Verbindung der beiden Gehäuseteile 2, 12 incl. Sitzring 27 mittels der erwähnten Schrauben 20 oder dergleichen durchgeführt wird.

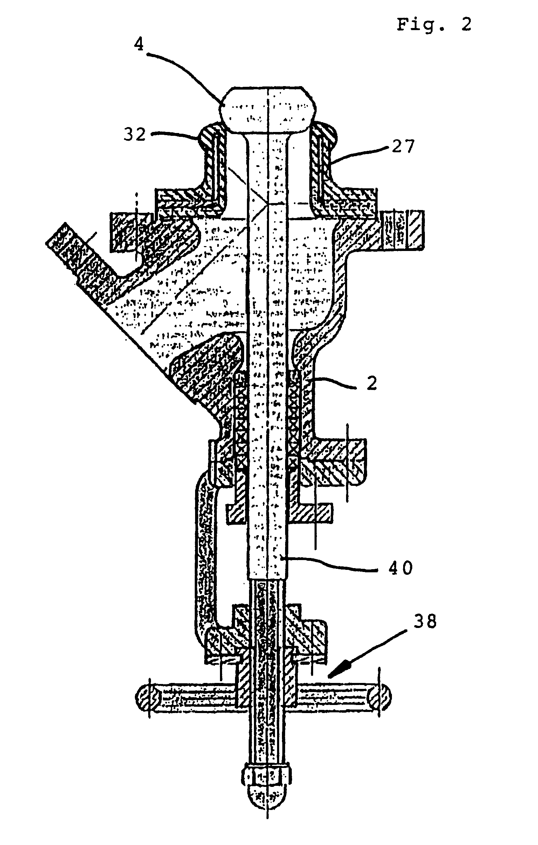

Fig. 2 zeigt in einem axialen Schnitt eine Ausführungsform des Ventils, wobei nunmehr auch der an sich bekannte manuelle Antrieb 38 zur axialen Verstellung der Ventilspindel 40 und des Ventilkörpers 4 dargestellt sind. Es bedarf keiner besonderen Hervorhebung, daß anstelle des manuellen Antriebs 38 am Ventilgehäuseteil 2 ein elektrischer, pneumatischer oder sonstiger Antrieb angeordnet sein kann. Der Ventilkörper 4 ist in der Absperrposition dargestellt, in welcher er am Sitzring 27 dichtend anliegt.

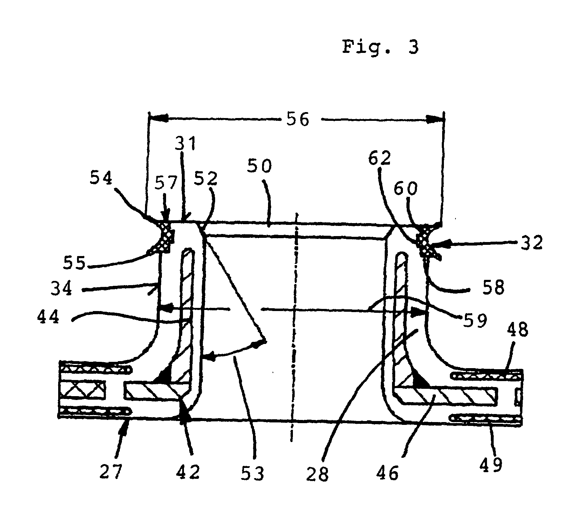

Fig. 3 zeigt vergrößert den Ventilsitz oder Sitzring 27, welcher im Inneren eine Einlage oder Verstärkung 42, vorzugsweise aus Metall, enthält. Die Einlage 42 enthält in zweckmäßiger Weise ebenso wie der komplette Sitzring 27 eine zur Ventilachse 6 koaxiale Buchse 44 sowie einen radialen Flansch 46. Die Buchse 44 und der radiale Flansch sind bevorzugt durch eine Schweißverbindung miteinander fest verbunden. Der Sitzring 27 besteht im übrigen in zweckmäßiger Weise aus elastischem Material, insbesondere Kunststoff wie PFA oder PTFE, wobei das elastische Material oder der Kunststoff eine Ummantelung der Einlage 42 bildet. Der radial gerichtete flanschartige Teil 30 enthält ferner zwei Scheiben 48, 49 derart, daß der radiale Flansch 46 der Einlage in axialer Richtung zwischen den Scheiben 48, 49 angeordnet ist. Am freien Ende 50 des zylindrischen Teils 28 ist die Innenfläche des Sitzringes 27 in zweckmäßiger Weise mit einer Fase oder Abschrängung 52 versehen, welche auf die Kontur des Ventilkörpers abgestimmt ist. Der Neigungswinkel 53 der Fase 52 zur Innenfläche des Sitzringes 27 liegt bevorzugt im Bereich zwischen 20° und 40°, insbesondere im Bereich zwischen 25° und 35°, wobei sich ein Winkel von im wesentlichen 30° als besonders zweckmäßig erwiesen hat.

Ferner ist das erfindungsgemäß vorgeschlagene elastische und ringförmige Dichtelement 32 gut zu erkennen. Das Dichtelement 32 ist hier in zweckmäßiger Weise als eine Lippendichtung ausgebildet. Das Dichtelement 32 besitzt vorzugsweise wenigstens zwei Lippen 54, 55, welche in vorteilhafter Weise die Abdichtung zur Innenfläche des erläuterten Stutzens gewährleisten. Das Dichtelement 32 ist im Bereich des freien Endes 50 angeordnet, und zwar unmittelbar im Anschluß an die Stirnfläche 31. Die Stirnfläche 31 geht in besonders zweckmäßiger Weise kontinuierlich in das Dichtelement 32 über. Des weiteren ist zu beachten, daß die radial innenliegende Anlage- oder Dichtfläche für den Ventilkörper gleichfalls im Bereich des freien Endes des Sitzringes angeordnet ist. In zweckmäßiger Weise ist das Dichtelement 32 zumindest näherungsweise in der gleichen Radialebene, und zwar bezogen auf die Längsachse 6, angeordnet wie die Anlage- oder Dichtfläche für den Ventilkörper 4. Das Dichtelement 32 und bei der hier dargestellten besonderen Ausführungsform dessen Dichtlippen 54, 55 weisen einen Außendurchmesser 56 auf. Der Außendurchmesser 56 ist im Rahmen der Erfindung um einen vorgegebenen Betrag größer als der unter Berücksichtigung der Fertigungstoleranzen, incl. der Auskleidung 25 der Innenfläche des zweiten Gehäuseteils 12. Fertigungstoleranzen, Maßabweichungen oder dergleichen werden somit mittels des Dichtelements 32 unter allen Umständen überbrückt, so daß das Eindringen oder gar das Festsetzen von Medium in einen Spalt oder Totraum zwischen dem Sitzring oder Ventilsitz 27 und dem Inneren des zweiten Gehäuseteils dauerhaft und funktionssicher vermieden werden.

Es hat sich als besonders zweckmäßig erwiesen, das Dichtelement 32 im Bereich der Außenfläche des vorderen freien Endes 50 des Sitzringes 27 anzuordnen. Hierdurch wird sichergestellt, daß über die gesamte axiale Länge des Sitzringes in dem oben erwähnten Ringspalt oder Totraum sich keine Bestandteile des Mediums festsetzen können. Auch bei unterschiedlichen Befüllungen des Behälters werden somit Verunreinigungen der nachfolgenden Füllungen durch Restmengen vermieden. Das Dichtelement 32 ist im wesentlichen bündig mit dem freien Ende 50 des Sitzringes 27 an dessen Außenfläche angeordnet. Das elastische Dichtelement 32 ist in besonders zweckmäßiger Weise mit dem Sitzring 27 fest und dauerhaft mittels eines Klebemittels oder dergleichen verbunden, so daß einerseits bei der Montage die gewünschte Positionierung gewährleistet ist und andererseits auch nach langer Gebrauchsdauer ein Herauslösen des am vorderen Ende des Sitzringes angeordneten Dichtelements 32 nicht zu befürchten ist.

Der Sitzring 27 enthält in der Außenfläche 34 in besonders zweckmäßiger Weise eine Aufnahme 56, welche bevorzugt als Ringnut ausgebildet ist. Diese Aufnahme 57 enthält wenigstens eine Stufe 58 und / oder eine ringförmige Anlagefläche 50, welche koaxial zur Achse 6 liegt und deren Durchmesser kleiner ist als der Durchmesser 59 der Außenfläche 34 des im wesentlichen zylindrischen Teils 28 des Sitzringes 27 Die ringförmige Aufnahme 56 enthält vorteilhaft noch eine weitere Ringnut 62, in welche in zweckmäßiger Weise ein radial nach innen gerichteter Steg des Dichtringes 32 eingreift, wodurch eine gute Arretierung und Festlegung des Dichtringes 32 am vorderen Ende des Sitzringes 27 sichergestellt ist. Wie aus der Zeichnung ersichtlich, ist erfindungsgemäß der Außendurchmesser 56 des Dichtelements 32 um einen vorgegebenen Betrag größer als der Außendurchmesser 59 des zylindrischen Teils 28 des Sitzringes 26. Da der Außendurchmesser 56 des Dichtelements 32, wie bereits erläutert, ferner um einen vorgegebenen Betrag größer ist als der Innendurchmesser des zweiten Gehäuseteils, an dessen Innenfläche das Dichtelement 32 anliegt, wird eine radiale Verpressung oder Vorspannung des Dichtelements 32 und in der Folge eine dauerhafte Abdichtung gewährleistet.

Durch die Darstellung und Erläuterung des Ventils als Auslaufventil erfolgt keine Beschränkung der Erfindung. Das Ventil kann gleichermaßen als ein Einfüllventil, beispielsweise im Deckenbereich eines Tanks oder sonstigen Behälters angeordnet sein. Maßgeblich ist, daß mittels des Dichtelements ein Ringspalt oder Totraum zwischen dem Sitzring und der Stutzeninnenfläche abgedichtet wird. Mit dem vorzugsweise als Lippendichtung ausgebildeten Dichtelement erfolgt ein Ausgleich von Abweichungen der Geometrie, der Maße und/oder der Oberflächengenauigkeit des den Ventilsitz aufnehmenden Gehäuseteils oder Stutzens, insbesondere dessen Auskleidung. Unabhängig von der jeweiligen Ausführungsform ist wesentlich, daß der durch eine Auskleidung bedingte Ringspalt oder Totraum zwischen der rotationssymmetrischen Innenfläche, sei es des erläuterten Stutzens oder des Ventilgehäuses selbst, mittels des in den Sitzring integrierten Dichtelements ausgeglichen wird. Durch das an der Außenfläche des Sitzringes oder Ventilsitzes angeordnete und um einen vorgegebenen Betrag über die Außenfläche vorstehende Dichtelement wird das Dichtverhalten praktisch nicht verändert. Das Dichtelement ist erfindungsgemäß nur lokal in einem kleinen Bereich der Gesamtlänge des Ventilsitzes angeordnet, so daß eine unerwünschte zu große radiale Verspannung des Ventilsitzes insgesamt vermieden wird und gleichwohl sehr große Toleranzbereiche für den Innendurchmesser des zugeordneten und den Ventilsitz umgebenden Gehäuseteils zugelassen und ausgeglichen werden können.

### Bezugszeichen

- 2: erster Gehäuseteil
- 4: Ventilkörper
- 5: Dichtfläche
- 6: Achse
- 7: Durchmesser von 4
- 8: Auslauf
- 10: Pfeil
- 12: zweiter Gehäuseteil / Stutzen
- 14: Behälter
- 16, 18: Flansch
- 20: Linie / Schraube
- 22, 23: Innenfläche von 12 bzw. 14
- 24, 25: Auskleidung
- 27: Sitzring / Ventilsitz
- 28: zylindrischer Teil von 27
- 30: flanschartiger Teil von 27
- 31: Stirnfläche
- 32: Dichtelement
- 33: Innendurchmesser von 12
- 34: Außenfläche von 28
- 36: Totraum / Ringspalt
- 37: Pfeil
- 38: Antrieb
- 40: Ventilspindel
- 42: Einlage / Verstärkung
- 44: Buchse
- 46: radialer Flansch
- 48, 49: Scheibe
- 50: freies Ende
- 52: Fase
- 53: Neigungswinkel
- 54, 55: Lippe
- 56: Außendurchmesser von 32
- 57: Aufnahme
- 58: Stufe
- 59: Durchmesser von 34
- 60: Anlagefläche
- 62: Ringnut

## Patentansprüche

1. Ventil mit einem Ventilgehäuse (2, 12), einem bewegbaren Ventilkörper (4) und einem zugeordneten Sitzring (27), welcher in einem Gehäuseteil (12) des Ventilgehäuses angeordnet ist und einen zylindrischen oder ringförmigen Teil (28) mit einer Außenfläche (34) sowie einen flanschförmigen Teil (30) aufweist und insbesondere zumindest teilweise aus Kunststoff besteht, wobei der Ventilkörper (4) im Bereich des freien Endes des Sitzringteils (28) an diesen zur Anlage bringbar ist und wobei ferner der flanschförmige Teil (30) zwischen dem Ende des Gehäuseteils (12) und einem anderen Gehäuseteil (2) des Ventilgehäuses eingespannt ist,
**dadurch gekennzeichnet, daß** der Sitzring (27) an der Außenfläche (34) ein elastisches Dichtelement (32) aufweist, welches über die Außenfläche (34) radial vorsteht und an der Innenfläche (23) des einen Gehäuseteils (12) dichtend anliegt, und daß das Dichtelement (32) im Bereich des freien Endes (50) des Sitzringteils (28) angeordnet ist.

2. Ventil nach Anspruch 1, **dadurch gekennzeichnet, daß** das Dichtelement (32) nur einen vorgegebenen Teil der Außenfläche (34) des Dichtelements (32) einnimmt und / oder unmittelbar im Anschluß an die Stirnfläche (31) des Sitzringes (27) angeordnet und/oder kontinuierlich an die vordere Stirnfläche (31) anschließt.

3. Ventil nach Anspruch 1 oder 2, **dadurch gekennzeichnet, daß** das Dichtelement (32) fest mit dem Sitzring (27) verbunden ist und / oder ein integraler Bestandteils desselben ist und/oder als Lippendichtung ausgebildet ist und / oder daß das als Lippendichtung ausgebildete Dichtelement (32) wenigstens zwei Dichtlippen (54, 55) aufweist, welche radial nach außen gerichtet sind.

4. Ventil nach einem der Ansprüche 1 bis 3, **dadurch gekennzeichnet, daß** das Dichtelement (32) einen Außendurchmesser (56) aufweist, welcher größer ist als der Außendurchmesser (59) der Außenfläche (34) des Sitzringes (27) und welcher ferner größer ist als der Innendurchmesser (25) des Gehäuseteils (12), wobei der Innendurchmesser (25) des Gehäuseteils (12) größer ist als der Außendurchmesser (59) des im wesentlichen zylindrischen Teils (28) des Sitzringes (27).

5. Ventil nach einem der Ansprüche 1 bis 4, **dadurch gekennzeichnet, daß** der flanschförmige Teil (30) zwischen Flanschen (16, 18) der Gehäuseteile (2, 12) eingespannt ist und/ oder daß der flanschförmige Teil (30) vorzugsweise im Bereich wenigstens einer seiner axialen Außenflächen eine Scheibe (48, 49) enthält.

6. Ventil nach einem der Ansprüche 1 bis 5, **dadurch gekennzeichnet, daß** die Außenfläche des Sitzringes (27), insbesondere dessen zylindrischen Teils (28), eine Aufnahme (56) für das Dichtelement (32) und / oder eine Stufe (58) und / oder eine ringförmige Anlagefläche (60) und/oder eine Ringnut (62) aufweist.

7. Ventil nach einem der Ansprüche 1 bis 6, **dadurch gekennzeichnet, daß** das Dichtelement (32) in die Außenfläche des zylindrischen Teils (68) des Sitzringes (27) integriert ist und / oder als ein im wesentlichen radial gerichteter über die Außenfläche des zylindrischen Teils (68) vorstehender Ringwulst ausgebildet ist.

8. Ventil nach einem der Ansprüche 1 bis 7, **dadurch gekennzeichnet, daß** der zumindest teilweise aus Kunststoff, insbesondere PFA oder PTFE, bestehende Sitzring (27) innen eine vom Kunststoff im wesentlichen ummantelte Einlage (42) oder Verstärkung enthält und/oder daß die Einlage (42) oder Verstärkung eine zylindrische Buchse (44) und einen radialen Flansch (46) aufweist.

9. Ventil nach einem der Ansprüche 1 bis 8, **dadurch gekennzeichnet, daß** der Sitzring (26) im Bereich seines vorderen Endes (50) radial innen eine Fase (52) aufweist und / oder daß die Fase (52) einen vorgegebenen Winkel zur Innenfläche aufweist, wobei dieser Winkel insbesondere zwischen 20° und 40°, vorzugsweise zwischen 25° und 35°, groß ist und vorzugsweise im wesentlichen 30° beträgt.

10. Ventil nach einem der Ansprüche 1 bis 9, **dadurch gekennzeichnet, daß** das Dichtelement (32), vorzugsweise mit wenigstens einer Lippe (54, 55), in einem vorgegebenen Abstand über die Außenfläche (34) des vorderen und / oder zylindrischen Teils (28) des Dichtelements (32) vorsteht.

## Claims

1. A valve having a valve housing (2, 12), a movable valve body (4) and an associated seating ring (27), this valve being arranged in a housing part (12) of the valve housing and having a cylindrical or annular part (28) with an outer face (34) and a flange-like part (30) and being in particular made at least partly from plastics material, where the valve body (4) may be brought into abutment in the region of the free end of the seating ring part (28) with the latter and where furthermore the flange-like part (30) is clamped between the end of the housing part (12) and another housing part (2) of the valve housing,
**characterised in that** the seating ring (27) has on the outer face (34) a resilient sealing element (32) which juts radially beyond the outer face (34) and is in sealing abutment with the inner face (23) of the one housing part (12), and **in that** the sealing element (32) is arranged in the region of the free end (50) of the seating ring part (28).

2. A valve according to Claim 1, **characterised in that** the sealing element (32) only occupies a predetermined part of the outer face (34) of the sealing element (32) and/or is arranged directly adjoining the front face (31) of the seating ring (27) and/or continuously adjoins the front face (31).

3. A valve according to Claim 1 or 2, **characterised in that** the sealing element (32) is fixedly connected to the seating ring (27) and/or is an integral part thereof and/or is constructed as a lip seal, and/or **in that** the sealing element (32) which is constructed as a lip seal has at least two sealing lips (54, 55) which are directly radially outwards.

4. A valve according to one of Claims 1 to 3, **characterised in that** the sealing element (32) has an external diameter (56) which is larger than the external diameter (59) of the outer face (34) of the seating ring (27) and is furthermore larger than the internal diameter (25) of the housing part (12), with the internal diameter (25) of the housing part (12) being larger than the external diameter (59) of the substantially cylindrical part (28) of the seating ring (27).

5. A valve according to one of Claims 1 to 4, **characterised in that** the flange-like part (30) is damped between flanges (16, 18) of the housing parts (2, 12), and/or **in that** the flange-like part (30) preferably has in the region of at least one of its axial outer faces a plate (48, 49).

6. A valve according to one of Claims 1 to 5, **characterised in that** the outer face of the seating ring (27), in particular the cylindrical part (28) thereof, has a receiver (56) for the sealing element (32) and/or a step (58) and/or an annular abutment face (60) and/or an annular groove (62).

7. A valve according to one of Claims 1 to 6, **characterised in that** the sealing element (32) is integrated in the outer face of the cylindrical part (68) of the seating ring (27) and/or is constructed as a substantially radially directed annular bead jutting beyond the outer face of the cylindrical part (68).

8. A valve according to one of Claims 1 to 7, **characterised in that** the seating ring (27), which is made at least partly from plastics material, in particular PFA or PTFE, has on the inside an insert (42) or reinforcement substantially encased in plastics material, and/or **in that** the insert (42) or reinforcement has a cylindrical bush (44) and a radial flange (46).

9. A valve according to one of Claims 1 to 8, **characterised in that** the seating ring (26) has radially inwardly, in the region of its front end (50), a chamfer (52), and/or **in that** the chamfer (52) has a predetermined angle with respect to the inner face, this angle in particular being in the range between 20° and 40°, preferably between 25° and 35°, and preferably being substantially 30°.

10. A valve according to one of Claims 1 to 9, **characterised in that** the sealing element (32), preferably having at least one lip (54, 55), abuts by a predetermined spacing beyond the outer face (34) of the front and/or cylindrical part (28) of the sealing element (32).

## Revendications

1. Soupape avec un boîtier (2, 12) de soupape, un corps (4) de soupape mobile et une bague formant siège associée (27), qui est placée dans une partie (12) de boîtier du boîtier de soupape et présente une partie cylindrique ou annulaire (28) avec une surface extérieure (34) ainsi qu'une partie en forme de bride (30) et se compose en particulier au moins en partie d'une matière plastique, le corps (4) de soupape pouvant être mis en appui, au niveau de l'extrémité libre de partie de bague formant siège (28) contre celle-ci et la partie en forme de bride (30) étant serrée de plus entre l'extrémité de la partie (12) de boîtier et une autre partie (2) de boîtier du boîtier de soupape,
***caractérisé en ce que*** la bague formant siège (27) présente sur la surface extérieure (34) un élément d'étanchéité élastique (32) qui forme saillie radiale au-delà de la surface extérieure (34) et s'appuie de manière étanche sur la surface intérieure (23) de la première partie (12) de boîtier, et
***en ce que*** l'élément d'étanchéité (32) est placé au niveau de l'extrémité libre (50) de la partie de bague formant siège (28).

2. Soupape selon la revendication 1, ***caractérisé en ce que*** l'élément d'étanchéité (32) n'occupe qu'une partie prédéterminée de la façade extérieure (34) et/ou est placé directement à la suite de la surface frontale (31) de la bague formant siège (27) et/ou se raccorde de manière continue à la surface frontale antérieur (31).

3. Soupape selon la revendication 1 ou 2, ***caractérisé en ce que*** l'élément d'étanchéité (32) est relié fixement à la bague formant siège (27) et/ou fait partie intégrante de celle-ci et/ou est conformé en joint à lèvres et/ou ***en ce que*** l'élément d'étanchéité (32) conformé en joint à lèvres présente au moins deux lèvres d'étanchéité (54, 55) qui sont dirigées radialement vers l'extérieur.

4. Soupape selon l'une quelconque des revendications 1 à 3, ***caractérisé en ce que*** l'élément d'étanchéité (32) présente un diamètre extérieur (56) qui est supérieur au diamètre extérieur (59) de la surface extérieure (34) de la bague formant siège (27) et qui est supérieur de plus au diamètre intérieur (25) de la partie de boîtier (12), le diamètre intérieur (25) de la partie de boîtier (12) étant plus grand que le diamètre extérieur (59) de la partie (28) pour l'essentiel cylindrique de la bague formant siège (27).

5. Soupape selon l'une quelconque des revendications 1 à 4, ***caractérisée en ce que*** la partie (30) en forme de bride est serrée entre des brides (16, 18) des parties de boîtier (2, 12) et/ou ***en ce que*** la partie en forme de bride (30) contient de préférence un disque (48, 49) au niveau d'au moins l'une de ses surfaces extérieures axiales.

6. Soupape selon l'une quelconque des revendications 1 à 5, ***caractérisé en ce que*** la surface extérieure de la bague formant siège (27), en particulier de sa partie cylindrique (28), présente un logement (56) pour l'élément d'étanchéité (32) et/ou un gradin (58) et/ou une surface d'appui annulaire (60) et/ou une rainure annulaire (62).

7. Soupape selon l'une quelconque des revendications 1 à 6, ***caractérisée en ce que*** l'élément d'étanchéité (32) est intégré dans la surface extérieure de la partie cylindrique (28) de la bague formant siège (27) et/ou est conformé en bourrelet annulaire orienté sensiblement radialement et formant saillie au-delà de la surface extérieure de la partie cylindrique (28).

8. Soupape selon l'une quelconque des revendications 1 à 7, ***caractérisée en ce que*** la bague formant siège (27) composée au moins partiellement de matière plastique, en particulier de PFA ou de PTFE, comprend à l'intérieur une garniture (42) ou renfort entourée pour l'essentiel de matière plastique, et/ou ***en ce que*** la garniture (42) ou renfort présente une douille cylindrique (44) et une bride radiale (46).

9. Soupape selon l'une quelconque des revendications 1 à 8, ***caractérisée en ce que*** la bague formant siège (26) présente un chanfrein (52) à l'intérieur radialement au niveau de son extrémité antérieure (50), et/ou ***en ce que*** le chanfrein (52) présente un angle prédéterminé par rapport à la surface intérieure, cet angle étant compris en particulier entre 20° et 40°, de préférence entre 25° et 35°, et valant de préférence sensiblement 30°.

10. Soupape selon l'une quelconque des revendications 1 à 9, ***caractérisée en ce que*** l'élément d'étanchéité (32), de préférence avec au moins une lèvre (54, 55), forme saillie sur une distance prédéterminée au-delà de la surface extérieure (34) de la partie antérieure et/ou cylindrique (28) de l'élément d'étanchéité (32).
